# EUROPEAN PATENT APPLICATION

(11) **EP 2 014 920 A2**
(43) Date of publication of application: **14.01.2009**
(21) Application number: 08011933.2
(22) Date of filing: 02.07.2008
(51) Int. Cl.: F04D 13/04

(54) **Coolant pump for processing machinery**

(30) Priority: 12.07.2007 TW 96211362 U
(71) Applicant: Yang, Chen-Fu, Beitun District Taichung City 406 (TW)
(72) Inventor: Shih, Kai-Neng, Da-an Township Taichung County 439 (TW)
(74) Representative: Becker Kurig Straus

(57) **Abstract**

A coolant pump (A) for processing machinery includes a housing (1), a water guide member (2), and a drive device (3). The housing (1) includes a chamber (11), a wind inlet (12), and a wind outlet (13). The water guide member (2) includes a hollowed portion (21), a water inlet (22), and a water outlet (23). The drive device (3) includes a transmission shaft (31), a pumping member (32), and a blade assembly (33). The pumping member (32) is mounted in the hollowed portion (21) of the water guide member (2) and to the other end of the transmission shaft (31). The blade assembly (33) is mounted to the other end of the transmission shaft (31) and located in the chamber (11) of the housing (1). The coolant pump (A) is highly safe and of long working life because it is powered by the air pressure and it is structurally simple and durable.

## Description

### BACKGROUND OF THE INVENTION

### 1. Field of the Invention

The present invention relates generally to cooling apparatuses for a cutter of processing machinery, and more particularly, to a coolant pump for processing machinery.

### 2. Description of the Related Art

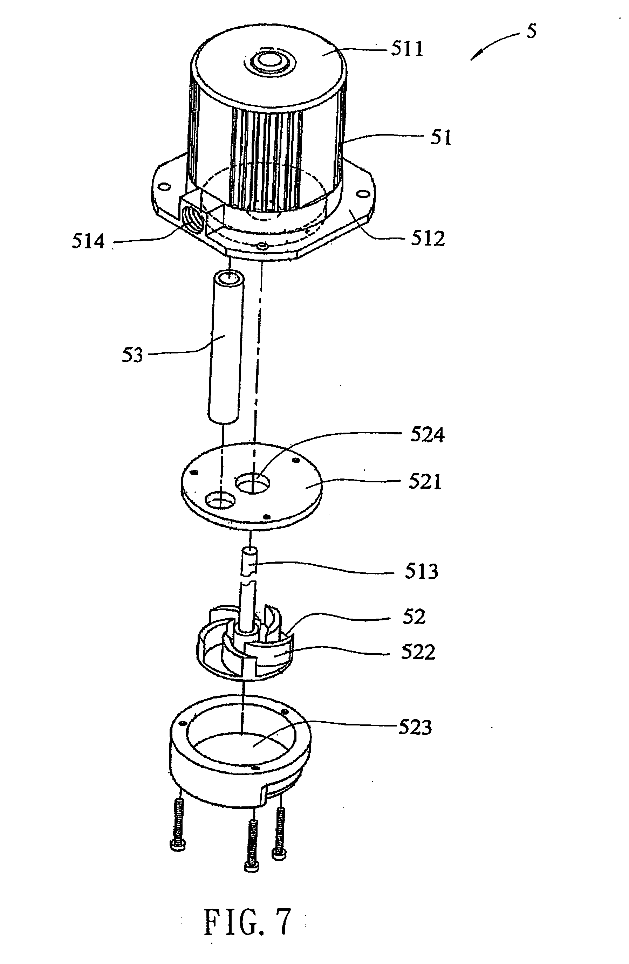

Referring to FIG. 7, a housing of a coolant pump as disclosed in Taiwan Utility Model No. 304585 is composed of a motor 51, a propeller assembly 52, and a pipe 53. The motor 51 includes a main body 511 and a fixture 512. The main body 511 is provided with a rotary shaft 513 therein that can be rotated by main body 511. The fixture 512 is provided with a through hole located at a center thereof with respect to the rotary shaft 513. The main body 511 is fixed to the fixture 512. The rotary shaft 513 passes through the through hole. The fixture 512 also has an outgoing passage 514 formed at one side thereof. The propeller assembly 52 includes a top cover 521, a propeller 522, and a bottom cover 523. The top cover 521 is provided with a suction hole 524 running through a center thereof with respect to the rotary shaft 513. The rotary shaft 513 passes through the suction hole 524 to be fixed with the propeller 522 at a distal end thereof. The top cover 521 is also provided with an outlet running through a predetermined position thereof. The bottom cover 523 has a concavity for receiving the propeller 522. The concavity becomes a closed chamber when the bottom cover 523 is butted with the top cover 521. The pipe 53 is as strong and long as the rotary shaft 513. The pipe 53 has two ends, one of which is fixed to the outgoing passage 514 and the other is fixed to the outlet.

However, the rotor of the motor is formed of silicon steel, copper coils, thermally dissipating housing, and magnets, such that the motor is heavy to be laborsome while being installed in the processing machinery. Besides, the motor has many parts and components to be structurally complicated, such that the production cost is high. Furthermore, the motor is close to the coolant tank, so that it may incur short circuit and electric shock.

### SUMMARY OF THE INVENTION

The primary objective of the present invention is to provide a coolant pump for processing machinery, wherein the coolant pump is structurally simple to facilitate its assembly with the processing machinery and thus the production cost can be reduced.

The secondary objective of the present invention is to provide a coolant pump for processing machinery, wherein the coolant does not incur short circuit or and electric shock..

The foregoing objectives of the present invention are attained by the coolant pump composed of a housing, a water guide member, and a drive device. The housing includes a chamber, a wind outlet, and a wind inlet located slantingly. The water guide member includes a hollowed portion, a water inlet, and a water outlet. The drive device includes a transmission shaft and a pumping member. The transmission shaft has one end connected with a propeller assembly mounted in the chamber of the housing. The pumping member is mounted in the hollowed portion of the water guide member and to the other end of the transmission shaft. A flange is mounted between the chamber and the water guide member, having a plurality of fix holes. A bearing is mounted to where the transmission shaft is pivoted to the housing. A wind-incoming member is mounted to the wind inlet slantingly, having a tapered threaded hole connected with a pipe coupling for connection with a gas pipeline. The water outlet is threaded and connected with a pipe coupling for connection with a water pipeline.

### BRIEF DESCRIPTION OF THE DRAWINGS

FIG. 1 is a perspective view of a preferred embodiment of the present invention.
FIG 2 is an exploded view of the preferred embodiment of the present invention.
FIG. 3 is a sectional view of the preferred embodiment of the present invention.
FIG. 4 is a top sectional view of the preferred embodiment of the present invention;
FIG. 5 is a sectional view of the preferred embodiment of the present invention in operation.
FIG. 6 a schematic view of the preferred embodiment of the present invention applied to a grinder.
FIG. 7 is an exploded view of the prior art.

### DETAILED DESCRIPTION OF PREFERRED EMBODIMENTS

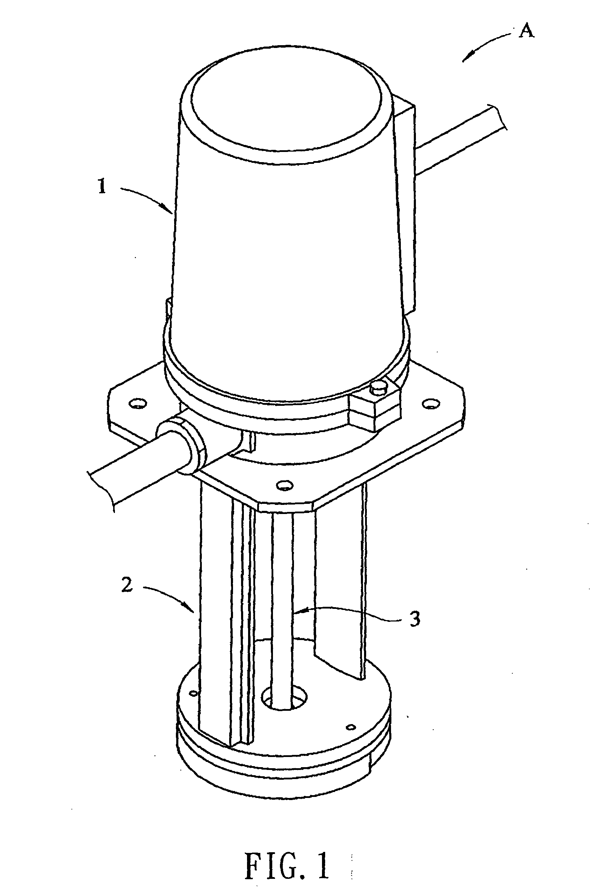

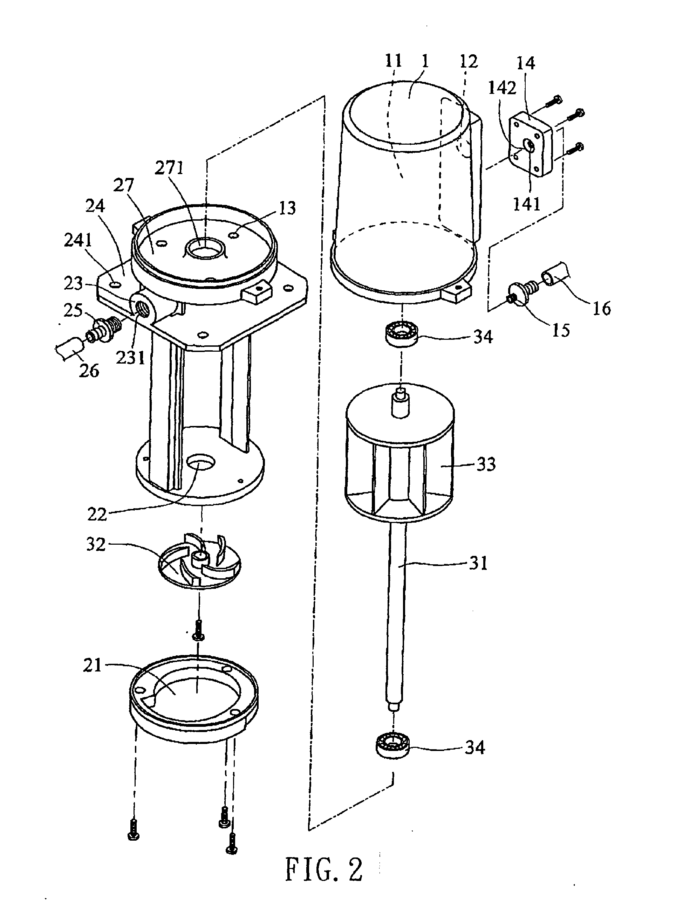

Referring to FIGS. 1, 2 & 4, a coolant pump A for processing machinery in accordance with a preferred embodiment of the present invention is composed of a housing 1, a water guide member 2, and a drive device 3.

The housing 1 is bell-shaped and includes a chamber 11, a wind inlet 12, a wind outlet 13, a wind-incoming member 14, and a pipe coupling 15. The wind-incoming member 14 is located slantingly at the wind inlet 12, having a tapered hole 141 and an internal thread 142 connected with the pipe coupling 15 for connection with an air pressure pipeline 16.

The water guide member 2 is shaped like a strut, including a hollowed portion 21, a water inlet 22, a water outlet 23, and a flange 24. The water inlet 22 is located above a center of a top side of the hollowed portion 21. The flange 24 has a plurality of fix holes 241. A chassis 27 is mounted to a predetermine position above the flange 24, having a through hole 271 running through a center thereof. The chassis 27 and the housing 1 are connected with each other to define a closed chamber. The water outlet 23 is located at a right side between the flange 24 and the chassis 27, having an internal thread 231 connected with the pipe coupling 25 for connection with a water pipe 26. In this way, the water inlet 22, the hollowed portion 21, and the water outlet 23 jointly become a passage for a coolant 42.

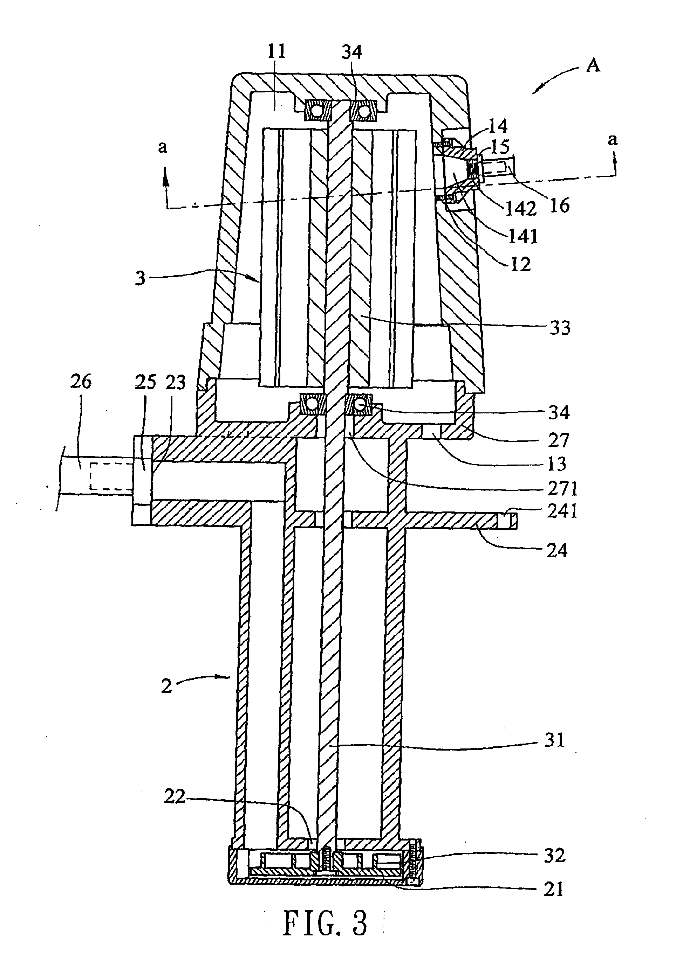

The drive device 3 includes a transmission shaft 31, a pumping member 32, and a blade assembly 33. The pumping member 32 is mounted in the hollowed portion 21 of the water guide member 2 and to one end of the transmission shaft 31. The other end of the transmission shaft 31 is connected with the blade assembly 33. The blade assembly 33 is mounted in the chamber 11 of the housing 1. As shown in FIG. 3, the transmission shaft 31 passes through the through hole 271 and the water inlet 22, and a bearing 32 is mounted between the housing 1 and the transmission shaft 31 and to the through hole 271.

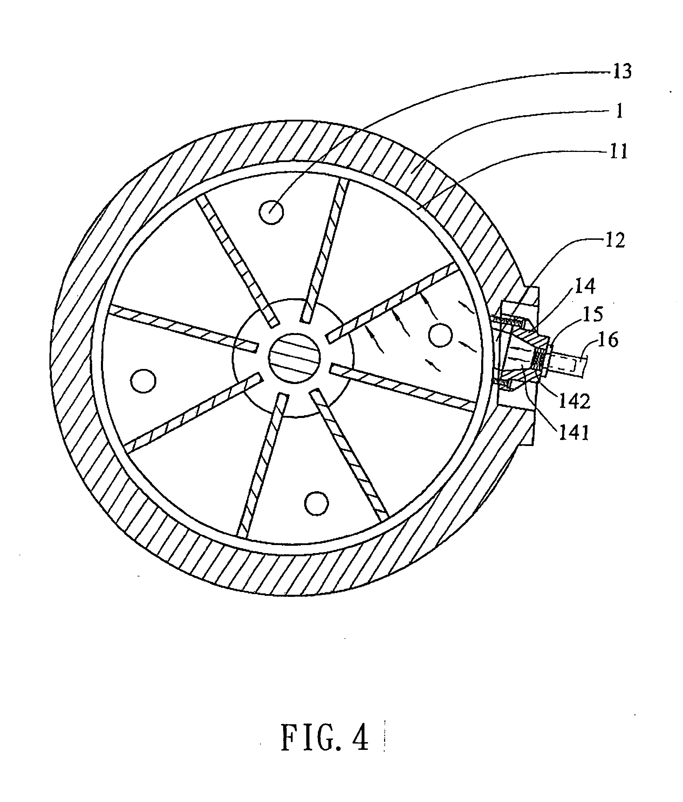

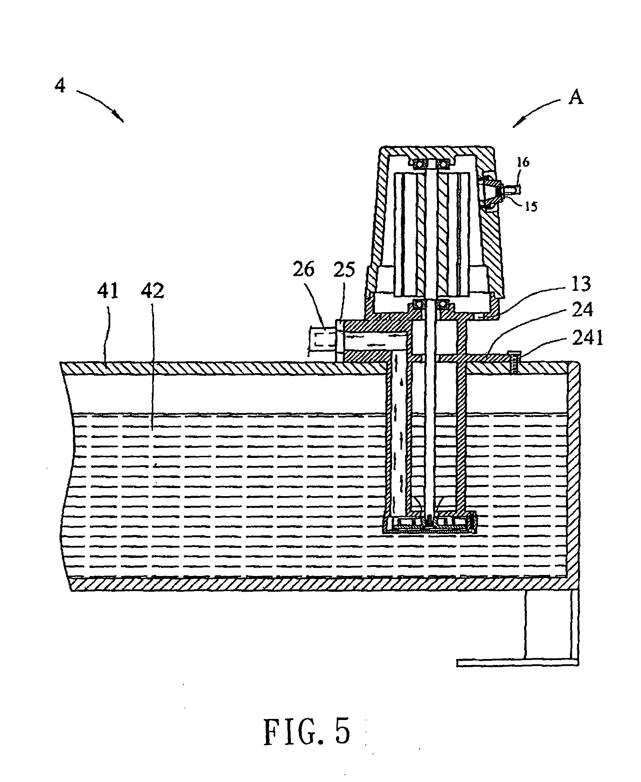

Referring to FIGS. 4 and 5, the coolant pump A is partially installed in a coolant container 41, and the flange 24 is fixed to a predetermined position above the coolant container 41 in such a way that screws are inserted into the fix holes 241. In this way, a lower part of the coolant pump A is dipped in the coolant 42, located below the flange 24. An upper par of the coolant pump A is connected with the air pressure pipeline 16 at the pipe coupling 15 thereof, located above the flange 24. The pipe coupling 25 is connected with the water pipe 26. An air pressure is introduced through the water inlet 12 and flows to the blade assembly 33 sidewards and then out of the wind outlet 13, such that an airstream is generated in the chamber 11 to drive rotation of the blade assembly 33, the transmission shaft 31, and the pumping member 32 to further pump the coolant 42 through the water inlet 22 into the water guide member 2 and then through the water outlet 23 and the water pipe 26 to the processing machinery for cooling a cutter of the processing machinery. Because the wind inlet 13 is provided with a tapered hole 141, the introduced air pressure can though gradually and slowly expand to lower the noise generated when the air pressure is ejected, but the tapered hole 141 cannot fully eliminate the noise. If it is necessary to further lower the noise, a silencer (not shown) can be mounted to the wind outlet 13.

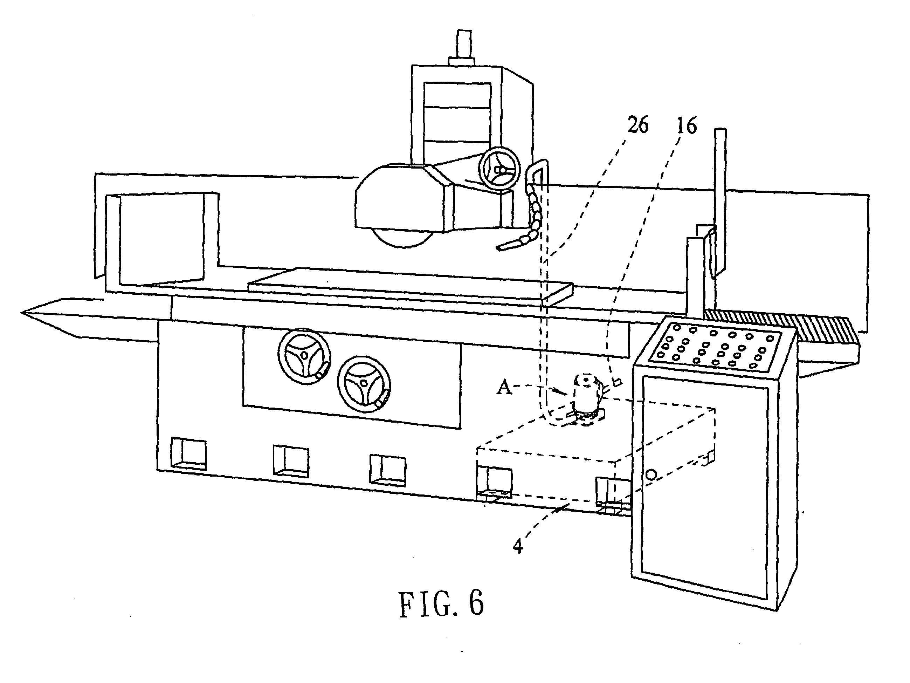

Referring to FIG. 6, the coolant pump A is connected with the air pressure pipeline 16, the water pipe 26, and the processing machinery, wherein the water pipe 26 is connected to where is adjacent to a grinding wheel of the processing machinery. The coolant pump A can pump the coolant 42 from the coolant container 41 to where is adjacent to the grinding wheel and then the coolant 42 flows outside. In addition, the introduced air pressure has been filtered by a pneumatic device to be lubricative clean air and then the clean air is adjusted by a flow regulator for a proper pressure. Besides, the air pressure can be applied to any processing machinery, which will produce chippings, as long as treated by a cooling device 4 of the coolant pump A.

In conclusion, the present invention can attain the following effects.

1.The present invention facilitates the assembly to the processing machinery and the maintenance, such that the product cost can be reduced.

2.The present invention is powered by the air pressure, such that no short circuit or electric shock will happen. Besides, the present invention is structurally simple and durable to have a long working life

Although the present invention has been described with respect to a specific preferred embodiment thereof, it is no way limited to the details of the illustrated structures but changes and modifications may be made within the scope of the appended claims.

## Claims

1. A coolant pump (A) for processing machinery, comprising:
a housing (1) having a chamber (11), a wind inlet (12), and a wind outlet (13), said wind inlet (12) having a wind-incoming member (14) provided with a tapered hole (141), said tapered hole (141) being connected with a pipe coupling (15);
a water guide member (2) having a hollowed portion (21), a water inlet (22), and a water outlet (23); and
a drive device (3) having a transmission shaft (31), a pumping member (32), a blade assembly (33), said pumping member (32) being located in said hollowed portion (21) and mounted to an end of said transmission shaft (31), said blade assembly (33) being located at the other end of said transmission shaft (31) and connected with said pumping member (32) to be located in said chamber (11) of said housing (1);
whereby when said coolant pump (A) is dipped in a coolant and an air pressure is introduced from said wind inlet (12), the air pressure flows through said wind inlet (12) to said blade assembly (33) and out of said wind outlet (23), such that an airstream is generated in said chamber (11) to drive rotation of said blade assembly (33), said transmission shaft (31), and said pumping member (32) to further pump said coolant into said water guide member (2).

2. The coolant pump (A) as defined in claim 1 further comprising a flange (24), wherein said flange (24) is located between said housing (1) and said water guide member (2), said flange (24) further having a plurality of fix holes (241); and said wind inlet (12) is formed slantingly on said housing (1).

3. The coolant pump (A) as defined in claim 1 further comprising a bearing (32), wherein said bearing (32) is located at where said transmission shaft (31) is pivoted to said housing (1).

4. The coolant pump (A) as defined in claim 1, wherein said water outlet (23) is provided with an internal thread (231) for connection with a pipe coupling (25).

5. The coolant pump (A) as defined in claim 2, wherein said water outlet (23) is located a right side between said flange (24) and said housing (1) and provided with an internal thread (231) for connection with a pipe coupling (25).

6. The coolant pump (A) as defined in claim 1, wherein said wind-incoming member (2) is mounted to said housing (1) slantingly or in such a way that said tapered hole (141) is slantwise.
